# EUROPEAN PATENT APPLICATION

(11) **EP 2 604 887 A2**
(43) Date of publication of application: **19.06.2013**
(21) Application number: 12196796.2
(22) Date of filing: 12.12.2012
(51) Int. Cl.: F16G 13/07

(54) **A chain**

(30) Priority: 12.12.2011 GB 201121369; 14.09.2012 GB 201216409
(71) Applicant: Renold Plc., Wythenshawe, Manchester M22 5WL (GB)
(72) Inventor: Christmas, Michael Charles, Warrington, Cheshire WA1 4EY (GB); Hall, Trevor, Oakham, Rutland LE15 6NU (GB)
(74) Representative: Every, David Aidan

(57) **Abstract**

A chain comprises a plurality of axially spaced tubular rollers (1) that are interconnected by a plurality of link plates (6). Each link plate has two protruding articulation elements (7) that are each rotatably received in one of the rollers and each have a complementary shaped bearing surface (8) for sliding against the inner surface of the roller. The interconnection of the rollers can be achieved in several different ways, and many different designs of link plate can be adopted.

## Description

The present invention relates to a chain of the kind that is used, generally in combination with a sprocket, in drive or power transmission mechanisms etc.

A conventional roller bush chain for use in such applications comprises pairs of laterally opposed inner link plates interleaved with pairs of laterally opposed outer link plates along the length of the chain. Each pair of opposed inner link plates is connected together by a pair of spaced cylindrical bushes that are received in a friction fit in apertures in the inner links. Each outer link plate extends in parallel to the inner link plates and overlaps the adjacent ends of neighbouring inner links. The inner and outer link plates are interconnected on opposite sides of the chain by pins that pass through the bushes and aligned apertures in the outer link plates on both sides of the chain. The pin is fixed at each end to the outer link plates but is pivotal with respect to the inner link plates. A freely rotatable cylindrical roller is supported on each bush.

There is a requirement to provide a cheaper roller chain, particularly for low cost applications and/or applications where the loads are relatively low.

It is one object of the present invention to provide an improved or alternative chain.

According to the present invention there is provided a chain defining a longitudinal axis along its length, the chain comprising a plurality of axially spaced tubular rollers that are interconnected by a plurality of links, each link having at least two axially spaced protruding articulation elements for receipt by respective rollers, each roller being rotatably supported on articulation elements of adjacent links, each articulation element defining an arcuate bearing surface for sliding against the inner surface of a roller, the arcuate bearing surface being complementary to the inner surface of the roller.

The arrangement provides for a relatively low cost and simple chain that uses significantly less material than a conventional roller bush chain and in which the tensile load is borne at least partially by the rollers.

In one embodiment, one articulation element from each axially adjacent link is received in a given roller and the two bearing surfaces combine to support the roller in rotation as well as allow the roller to bear at least some of the tensile load.

The roller is rotatable relative to the articulation elements which are, in turn, able to articulate relative to the roller. The bearing surfaces support these movements.

Axially adjacent rollers may be interconnected by a single link or by a pair of laterally opposed links. It will be appreciated that the invention is intended to cover a chain in which only one axially adjacent pair of rollers are interconnected in this manner and an embodiment in which all or substantially all the rollers are so interconnected.

The links may be in the forms of plates.

The articulation elements may be in the form of sections of a cylinder, which may be hollow or solid, the outer surface of the cylinder defining the bearing surface. The articulation elements are thus effectively segmented bushes on which the roller rotates. They may extend across the full width of the roller. The roller may be a unitary component or may be split into two or more pieces.

When the chain is arranged to be straight, such that its longitudinal axis extends in a straight line, the rotational angular clearance between axially adjacent links, preferably substantially all such links in the chain, is preferably greater than 32 degrees. It is preferably less than 90 degrees, and more preferably approximately 60 degrees, in at least one direction. Alternatively, or in addition, when the chain is straight the angular clearance between substantially all longitudinally adjacent links may be approximately zero in one direction.

The rotational angular clearance may be defined between the articulation elements of axial adjacent links, the articulation elements being received in the same roller.

In instances where the rollers are interconnected by pairs of laterally opposed links the angular clearance between two axially adjacent links may in fact be determined by the angular clearance of the two other links of their respective pairs, as the two links of laterally opposed pairs may be unable to rotate independently.

The links are preferably laterally restrained so as to prevent significant movement away from the longitudinal axis of the chain. At least one of the links is so restrained and preferably substantially all links are laterally restrained. The restraint may be provided via retaining protrusions and complementary voids, said protrusions and voids being defined on one or both articulation elements of the restrained links and on the corresponding rollers. For example, the voids may be provided by spaces beyond the opposite ends of the rollers to the restrained links and the retaining protrusions may be provided by lips or hooked elements defined on the ends of the articulation elements. The retaining protrusions and complimentary voids of substantially all links so restrained may be held in engagement by positioning rods.

In an alternative embodiment laterally opposed pairs of links are laterally restrained against significant movement away from the longitudinal axis of the chain by means of an interconnection between the links. The interconnection may be provided by welding, gluing or otherwise bonding or may be provided by a mechanical connection.

One or more links may be laterally restrained by an interconnection between one or both articulation elements of a link and a roller.

The interconnection may provided by at least one protrusion and at least one complementary void.

The at least one retaining protrusion and complementary void may be held in engagement by positioning rods.

A spacer may be provided between each articulation element that is received in each roller. The spacer may have an arcuate surface to assist in relative articulating movement of the articulation elements in the roller. The spacer may be in the form of a cylindrical pin. It may be fixed to the articulation element either by integral formation with the link or by a suitable fixing means.

The links may be laterally restrained by at least one retention member. Each retention member may laterally restrain at least one of the links that has an articulation element received within said roller. At least one roller may receive at least one retention member. The retention member may be elongate. It may comprise two portions that are joined together. The portions may have a common bore, the portions being joined together by the insertion of an elongate element, such as a rod, into the common bore.

The two portions may be joined together by any suitable mechanical connection such as a snap-fit mechanism.

The at least one retention member may be a bobbin having a shaft portion passing through the roller and an enlarged head at each end for preventing removal of the bobbin from the roller, one or both of the enlarged heads at least partially overlying one or more of the links connected to the roller.

The retention member may have a clamp arm at each end, each clamp arm partially overlying a link of a pair of laterally opposed links and exerting a clamping force to urge it towards the other link of the pair. Each clamp arm may have a protrusion which is received in a complementary recess in the link that it partially overlies. The retention member and clamp arm may be formed from an elongate member such as a piece of wire or the like. The link may further comprise a ramped insertion path between the recess and an edge of the link, the insertion path being shaped to guide the protrusion towards the recess during attachment of the retention member and to cam the clamp arms away from each other during attachment so as to elastically deform the retention member and generate the clamping force.

Preferably, substantially all links are restrained by retention members. Substantially all retention members may each be made from one or more polymers.

The link may comprise an assembly comprising two separate articulation elements interconnected by at least one spacer plate. The articulation elements may be interconnected by laterally spaced first and second spacer plates, one being disposed at each end of the articulation elements and each extending over an end of the roller.

The spacer plate may comprise one or more alignment tabs at each end, each of which may be received within a complementary notch in the articulation elements to which the spacer plates are attached.

The assembly may further comprise a reinforcing brace having a central portion that extends over a spacer plate and two fingers that extend alongside the articulation elements. The reinforcing brace may be attached to the link by a mechanical connection such as, for example, a snap-fit connection. In particular it may be connected to at least one articulation element of the link. The connection may be provided by a projection that is received in a corresponding void. The projection may be formed on a finger with the void defined in an articulation element. The projection may extend beyond the bearing surface of the articulation element so as to provide a wear surface for the roller. The reinforcing brace may be made of one or more polymers, and more preferably of a fibre reinforced polymer.

At least one roller of the chain may have a projection on its internal surface for receipt in a corresponding recess in the articulation elements. This helps to provide lateral restraint for the link.

Substantially all the links may be made of one or more polymers. Instead or in addition, substantially all the links may be at least partially manufactured by forging, sintering or both.

The chain may be incorporated in a machine, may be supplied as a kit of parts, or both.

The articulation elements may be formed integrally with the links or be formed individually and joined to them. This may apply to at least one of the elements and preferably to substantially all the elements. One or more of the links may be made from one or more polymers, be single polymeric mouldings, or be at least partially manufactured by forging, sintering or both.

Specific embodiments of the present invention will now be described, by way of example only, with reference to the accompanying drawings in which:
Figure 1 shows an exploded view of a section of conventional roller bush chain;
Figure 2 shows an exploded view of a section of chain according to a first embodiment of the invention;
Figure 3 shows a side view of a section of assembled chain according to the first embodiment;
Figure 4 shows a side view of a section of chain according to a second embodiment of the invention;
Figure 5 shows a cross section of a length of chain according to a third embodiment of the invention;
Figure 6 shows a cross section of a length of chain according to a fourth embodiment of the invention;
Figure 7 shows a cross section of a length of chain according to a fifth embodiment of the invention;
Figure 8 shows an exploded view of a section of chain according to the fifth embodiment;
Figures 9 and 10 show alternative bobbin configurations to that of the fifth embodiment;
Figure 11 shows a cut-away perspective view of a length of chain according to a sixth embodiment of the invention;
Figure 12 is a part sectioned plan view of the chain of figure 11;
Figure 13 shows a retention member of the chain of figure 11 and 12;
Figure 14 shows a link plate of the chain of figure 11 and 12;
Figure 15 is a front view of the link plate of figure 14;
Figure 16 shows an exploded view the of the connection between adjacent rollers according to a seventh embodiment of the invention;
Figure 17 is a side view of an articulation element of the chain of figure 16;
Figure 18 shows a cut-away top view of a length of chain according to the seventh embodiment;
Figure 19 shows a perspective view of an alternative link plate design;
Figure 20 shows a cut-away top view of an alternative roller design;
Figure 21 is a perspective view of a length of chain according to an eight embodiment of the present invention; and
Figure 22 is a perspective view of part of the chain of figure 21.

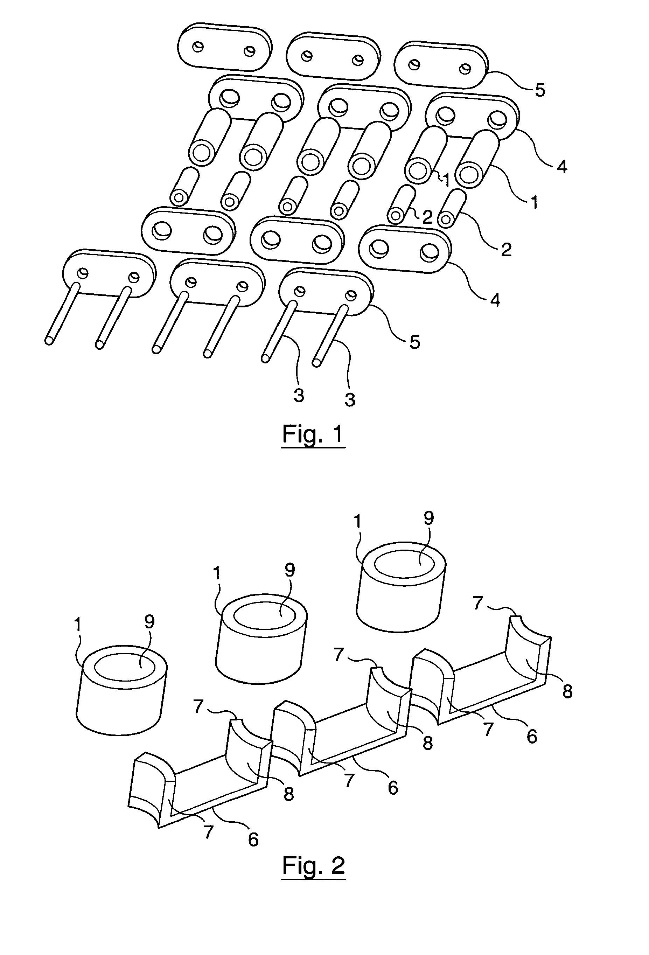

Referring now to the drawings, figure 1 shows the components of a conventional roller bush chain: rollers 1, bushes 2, pins 3, inner link plates 4 and outer link plates 5. Such a chain has been described in the introductory part of this document.

The chain of figure 2 has a plurality of rollers 1 interconnected by link plates 6. The axial spacing between adjacent rollers is regular and is designed so as to receive the teeth of a drive sprocket (not shown). Each link plate 6 has two articulation elements 7, one at each end, that protrude towards the longitudinal axis of the chain. Two such elements, one from each of two axially adjacent link plates 6, are rotatably received in each roller 1. Each articulation element takes the form of a section of a cylinder and has an outer bearing surface 8 that is complementary to the inner surface of the roller 1 and which slides smoothly against the inner surface 9 of the roller when the link plate rotates relative to the roller. The bearing surfaces 8 of the two articulation elements 7 in each roller thus combine to provide a surface that supports the roller. The link plates 6 in this embodiment therefore replace the inner 4 and outer 5 links, the pins 3 and the bushes 2 of conventional roller bush chains. When the chain is under tension, the force propagates through the rollers. The rollers therefore carry any tensile loading of the chain, unlike conventional chains where it is the pins 3 that transfer the loading between link plates.

The link plates 6 may be made from one or more polymers and may be single polymeric mouldings. They may be at least partially manufactured by forging, sintering or both. One or both of the articulation elements may be formed integrally with the rest of the link plate, or may be formed individually and joined to it, for example they may mechanically interlock or may be joined by laser welding, resistance welding, gluing or any other method.

In figure 1 the link plates 6 are shown only on one side of the chain. However, they may be provided on both sides. For example for every link plate 6 shown in figure 2 they may be a corresponding laterally opposite plate. Alternatively, the link plates 6 may be arranged such that they alternate sides along the length of the chain.

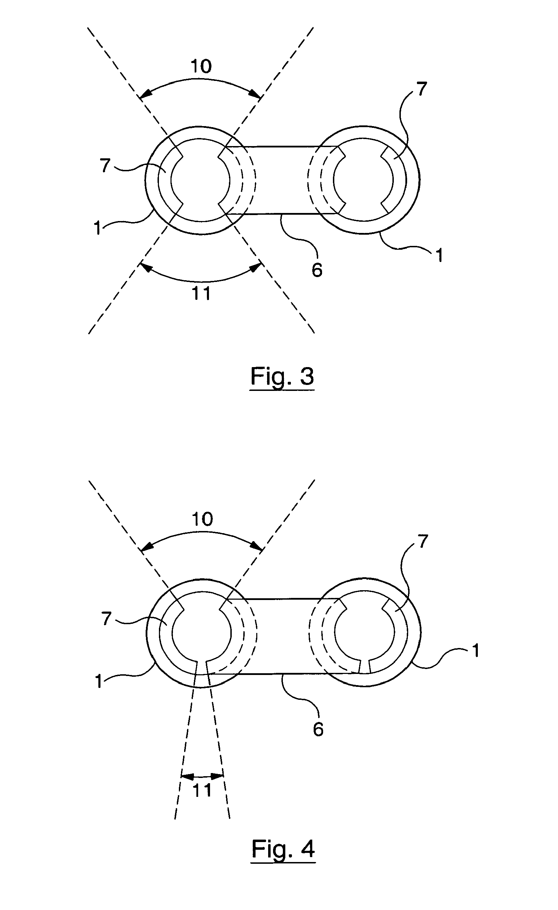

Figure 3 illustrates the rotational angular clearance 10, 11 between axially adjacent link plates 6 required for articulation of the chain. The angular clearance in one 10 or both 10, 11 directions when the chain is straight (i.e. with its longitudinal axis extending in a straight line) is preferably between 32 and 90 degrees, and more preferably around 60 degrees.

Figure 4 illustrates a second embodiment of the invention where the geometry of the articulation elements 7 has been adjusted to produce an anti-backbend chain, i.e. a chain that when it is straight will only bend (articulate) in one direction 10 owing to the angular clearance between articulation elements in the other direction 11 being approximately zero.

The angular clearance between axially adjacent link plates may be determined by the geometry of the articulation elements 7 that lie within the same roller 1, as discussed above and shown in figures 3 and 4. Alternatively, it may be determined by the geometry of other portions of the chain, such as the shape of the link plates themselves rather than that of their articulation elements.

One or more of the link plates 6 of the chain of the present invention may be laterally restrained. This prevents the articulation elements 7 from being withdrawn from the rollers 1, which could result in disconnection of the chain while it is in use.

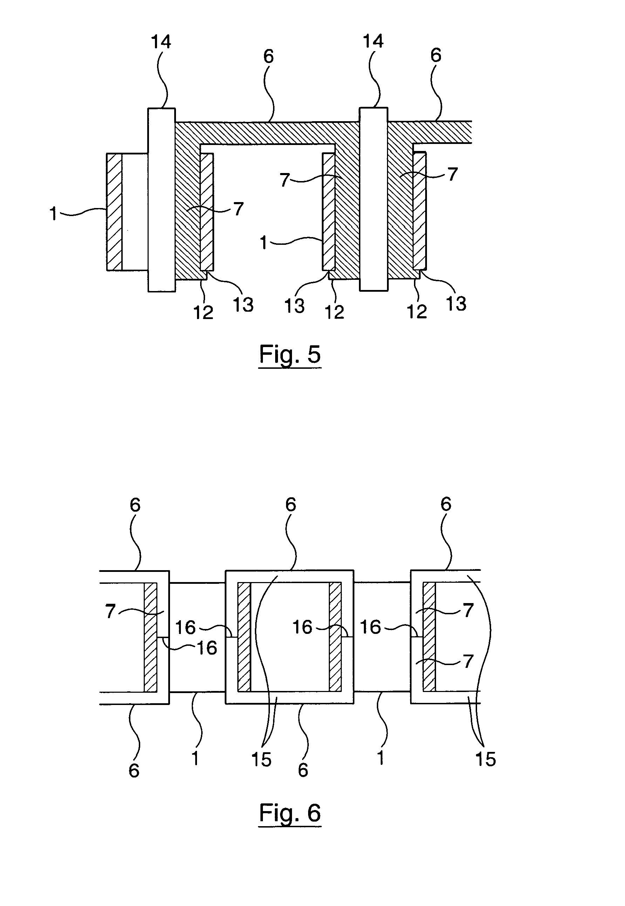

In the third embodiment, shown in figure 5, each link plate is laterally restrained via a retaining protrusion in the form of lip 12 defined on each end of the articulation elements 7. The lips 12 extend over the ends of the rollers 1 to prevent withdrawal of the articulation elements. The lips 12 fit into voids provided by the spaces 13 beyond the far end of the rollers 1. The chain also includes a positioning rod 14 which occupies the space between the articulation elements 7 of axially adjacent link plates 6. It holds the lips 12 and rollers 1 in engagement by preventing the lips 12 from being withdrawn from the spaces by longitudinal movement of the link plates 6 relative to the rollers 1. The lip 12 may extend along the full length of the end of the articulation element or just part thereof. There may be more than one lip defined on each articulation element 7.

In alternative embodiments, the lip may be on the roller 1 and the space or void on the articulation element 7. Any form of protrusion and void may be adopted such as, for example, ridges and complementary grooves. Moreover, they may be at other locations on the rollers and articulation elements, such as around the centres, or near or at the ends proximal to the link plates 6. There may be more than one protrusion and more than one void on each articulation element and roller.

In the embodiment of figure 6 each roller 1 is connected to the adjacent rollers by a pair 15 of laterally opposed link plates 6. This arrangement may be applied to any of the preceding embodiments.

The ends of both the articulation elements 7 of each pair 15 of link plates abut and are joined together at a seam 16 to laterally restrain the two plates. The abutting ends may be joined by gluing, welding, inter-engaging mechanical connection features or by any other joining means known in the art. In alternative embodiments only one articulation element of each link plate of the pair may abut and be joined to the other, or both articulation elements of each plate may abut with those of the other plate in the pair but only one abutting pair of articulation elements may be joined.

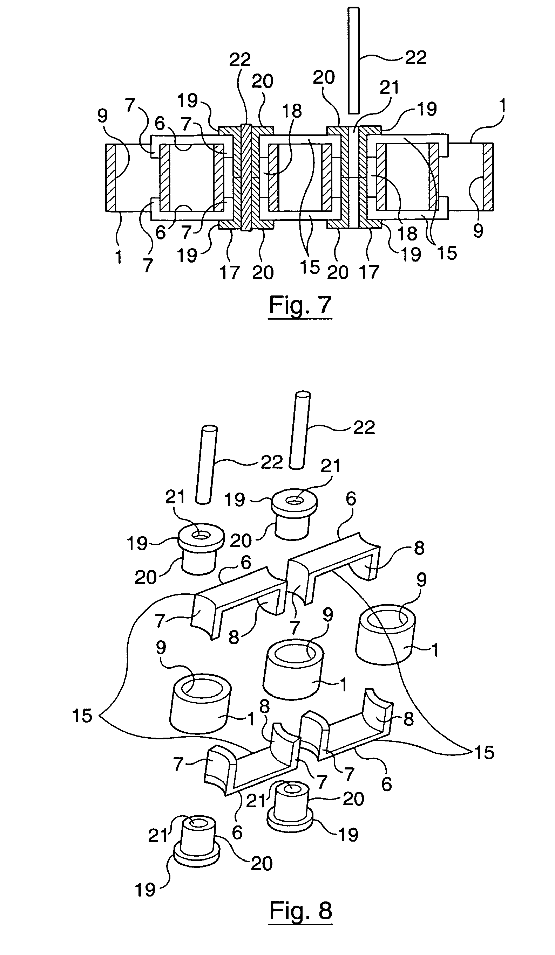

At least one of the rollers 1 of the chain of the present invention may receive one or more retention members for laterally restraining the link plates. In the embodiment of figures 7 and 8, the retention members take the form of bobbins 17. Each bobbin 17 has a shaft portion 18 passing through the roller 1 and an enlarged head 19 at each end for preventing removal of the bobbin from the roller. The enlarged heads 19 of each bobbin partially laterally overlie all four link plates 6 connected to the roller in which the bobbin is received, thereby restraining them against significant lateral movement out of the roller. The retention members, such as the bobbins, may be made of one or more polymers, may be made of a single polymer such as nylon, and may each be a single polymeric moulding.

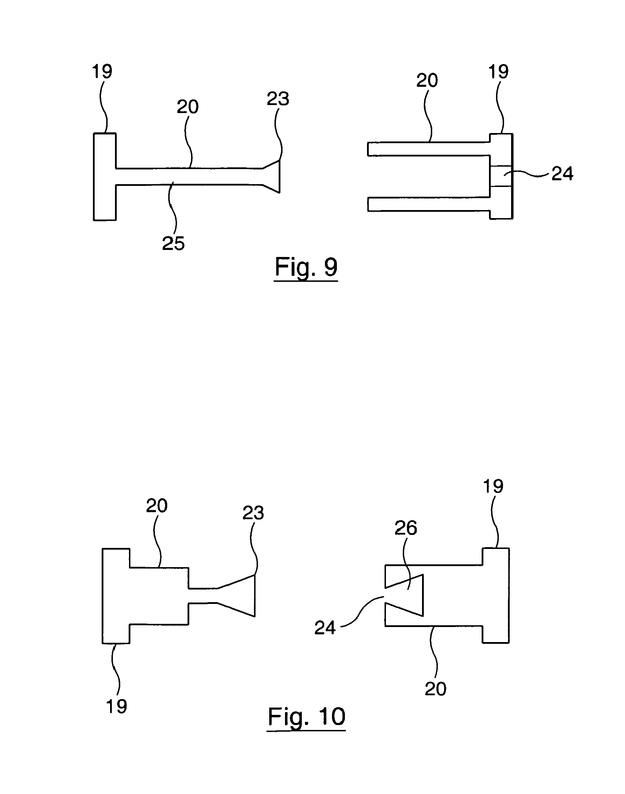

The retention members such as the bobbins 17 may be elongate and may each be assembled from two portions 20 that are penetrated by a common bore 21 and are fixed together by the insertion of a rod 22 into the common bore 21. The rod may be a friction-fit with the bobbins portions or it ends may deformed (e.g. riveted) after insertion. Figures 9 and 10 show alternative retention member configurations in which the portions are connected together by a snap-fit mechanism, whereby on pressing the portions together, a bulb 23 on one portion is compressed and forced through a neck 24 in the other. The bulb expands once it has passed through the neck and the head retains the bulb so as to prevent re-separation of the portions 20. In the configuration of figure 9 the bulb 23 lies on the end of a shaft 25 on one portion, which is received within the tubular body of the other axial portion, the neck 24 of which is formed by a longitudinal bore through its end (the enlarged head 19 of the bobbin 17 in this case). In the configuration of figure 10, the neck lies at the entrance to an internal cavity 26, and only the bulb 23 of one portion is received within the other portion. In other retention member configurations, each may be assembled from more than two portions and may or may not have one of the above joining mechanisms.

In alternative embodiments the portions 20 of each retention member may be screwed together, glued, welded or joined by any other method known in the art. Alternatively, where the retention members are bobbins one or both the enlarged heads 19 of each bobbin may be created by mechanical deformation after insertion of its shaft 18 into the roller 1.

In embodiments where the connection between adjacent rollers is made by a single link plate, each roller will receive an articulation element from each of two axially adjacent link plates. Where the connection is made by a pair of laterally opposed link plates, each roller will receive four articulation elements from four link plates (two axially adjacent link plates on each side).

A retention member may laterally restrain just one link plate or both the adjacent link plates. In embodiments where the connections between rollers are made by pairs of laterally opposed link plates 15, each retention member may laterally restrain one link plate, both link plates of a laterally opposed pair, two axially adjacent link plates, three link plates, or all four link plates that have articulation elements received in the roller containing the retention member. One retention member in a chain may not laterally restrain the same number of link plates as another. In an alternative embodiment alternate rollers of a chain may contain retention members.

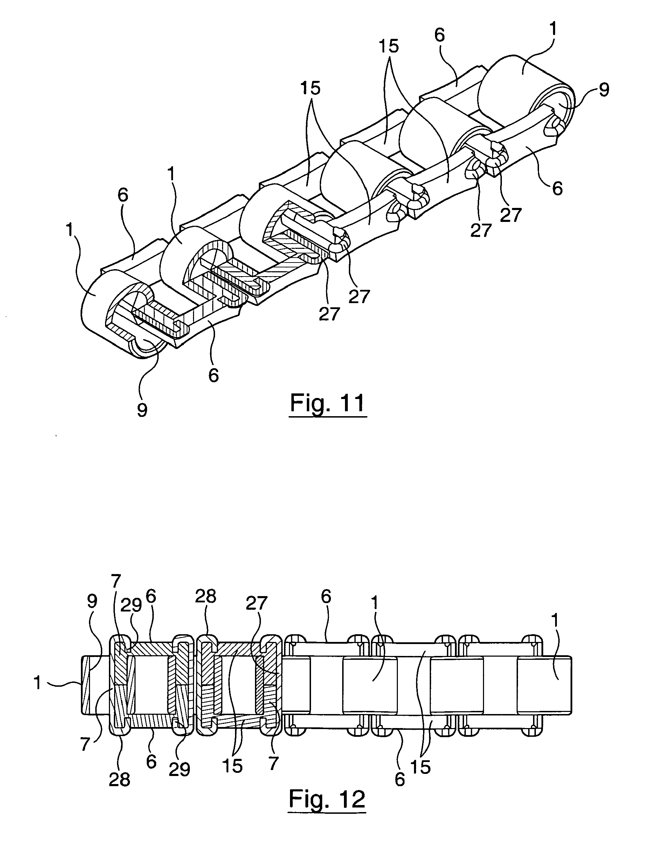

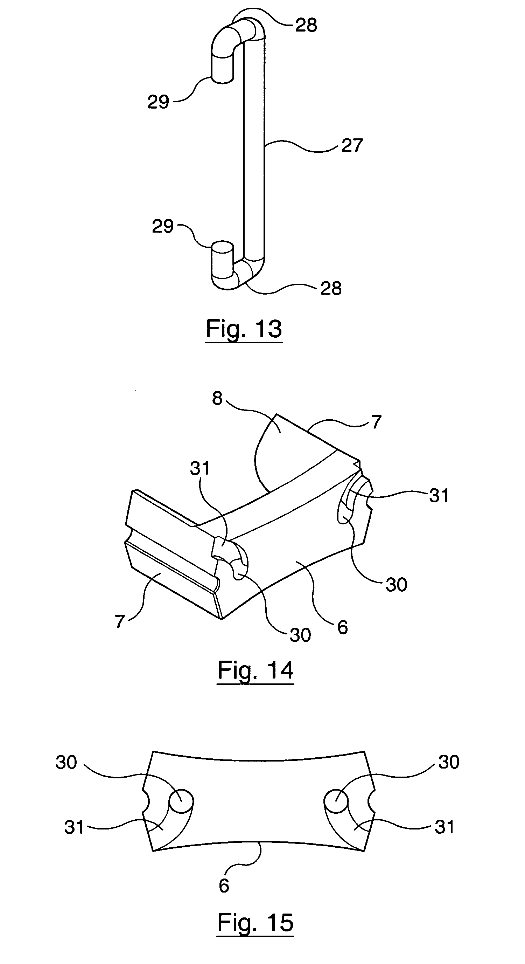

In the chain of figures 11 and 12, the retention members (shown in more detail in figure 13) are spring clips 27 and are made of a single piece of wire that is bent into an approximate C-shape. Each roller 1 receives two retention members and all four link plates 6 associated with a given roller are laterally restrained by such retention members. The ends of the wire retention members are inwardly turned to define a clamp arm 28 that terminates in a protrusion 29. Each clamp arm of a retention member partially overlies the lateral outwardly-facing surface of one link plate 6 of a pair of laterally opposed link plates 15. The clamp arms 28 at each end exert a clamping force on the opposed link plates thereby restraining them from significant lateral movement away from the longitudinal axis of the chain.

The protrusions 29 are directed towards the chain axis and are received in complementary recesses 30 in the outwardly facing flanks of the link plates 6 (as shown in figures 14 and 15). Each link plate has a ramped insertion path 31. The walls of the insertion path guide the protrusion 29 into the recess 30 when the retention member is attached to the link plate. Additionally, the insertion paths 31 are ramped so as to progressively cam the clamp arms 28 at each end away from each other during attachment of the retention member (the spring clip 27 in this case). This elastically deforms the retention member, the resistance to this deformation providing the clamping force that is exerted by the clamp arms. The insertion paths of the sixth embodiment are arcuate, allowing each retention element to be inserted into the roller before being twisted to secure it in place via the protrusions and complementary recesses. In other embodiments the insertion path may be substantially straight or may be any other shape.

In further alternative embodiments to the fifth or sixth embodiments, the retention member may be a rod or plate which extends between two articulation elements in the same roller, one from each of a pair of laterally opposite link plates, and is glued, welded or otherwise joined to secure the elements together and restrain the plates. Alternatively, the retention member may comprise two components one fixed to each articulation element and each having complementary teeth so as to form a ratchet-type mechanism. The teeth allow partial insertion of one component into another but prevent its withdrawal.

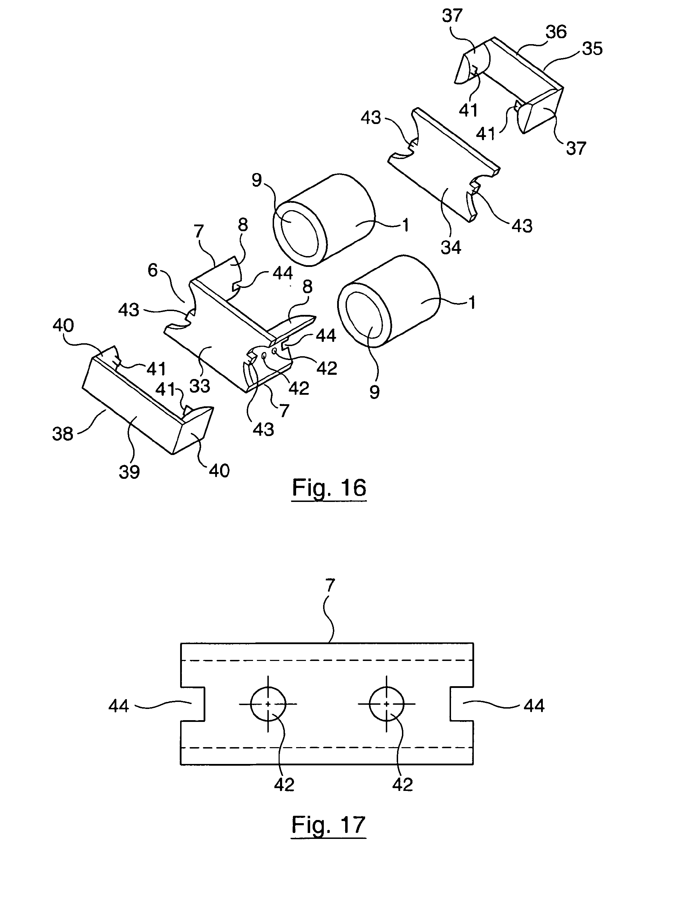

In the embodiment of figure 16 and 17, axially adjacent rollers 1 are connected by a single link 6, which is an assembly of two articulation elements 7 connected by spacer plates 33, 34 at each end. The spacer plates 33, 34 may be made of one or more polymers, may be single polymeric mouldings and be made of a fibre reinforced polymer such as glass filled nylon. The link plate 6 accommodates two reinforcing braces 35, 38 each of which has a central portion 36, 39 and two perpendicular fingers 37, 40 that extend towards the longitudinal axis of the chain. The central portion 36, 37 extends over the outwardly facing flank of a respective side plate 33, 34 and the fingers 37, 40 extend inwardly alongside the articulation elements 7. Each reinforcing brace 35, 38 is intended to bear the tensile load and the two combine to hold the link 6 together and restrain it against lateral movement out of the roller 1.

The reinforcing braces 35, 38 may be made of one or more polymers, may be single polymeric mouldings and/or be made of a fibre reinforced polymer such as carbon fibre reinforced PEEK.

The braces 35, 38 on each flank are connected to each other, via the articulation elements, by a snap-fit mechanism. Each finger 37, 40 of each brace has a protrusion 41 in the form of a retainer peg, each peg being received in a complementary void in the form of an aperture 42 on the corresponding articulation element 7, thereby securing the two components. Each spacer plate 33, 34 has an alignment tab 43 at each end that is received within a complementary notch 44 in the connected articulation element 7, the tabs and notches keeping the spacer plates and articulation elements in alignment prior to the attachment of the reinforcing braces.

In an alternative embodiment the pegs 41 may be on the articulation elements and the apertures 42 define in the fingers 37, 40. Another other form of mechanical connection using protrusions and voids may be adopted. Moreover, they may be provided at other locations on the reinforcing fingers and articulation elements. There may be one or more connections between each articulation element and reinforcing brace.

As an alternative to a snap-fit joining mechanism, the ends of one or both fingers of opposite reinforcing braces may interlock to hold them together.

While the articulation elements of the link plates of the sixth embodiment run the whole length of the rollers and extend out of either end of them, in alternative embodiments they may run substantially all the length of the rollers or may run only a proportion of the length of the rollers. They may extend out of one end of the rollers or neither, and may be flush with or recessed within one or both ends of the rollers.

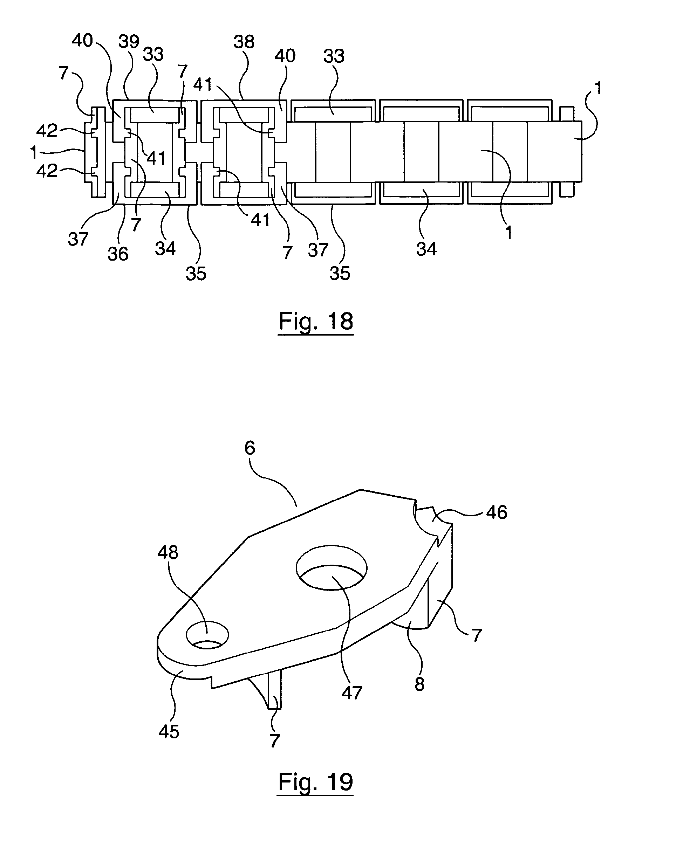

Figure 18 shows an alternative link plate design. When assembled into a chain the plates on each side of the chain overlap with one another. In order to afford this feature one end of the plate has a thin-walled section 45 that is designed to be received in a recess 46 in the end of the adjacent link.

The reverse face of the link has articulation elements 7 for receipt in respective rollers 1, each defining a bearing surface 8 that is complementary to the inside surface of the roller as in all preceding embodiments.

When laterally opposed links of this kind are connected together in any suitable manner as described in relation to any of the preceding embodiments, they are restrained against significant lateral movement out of the rollers 1.

The link plate of figure 19 has transverse hole 47 which can serve as a mounting point for attachments. It also has a hole 48 which may receive the positioning rod of the third embodiment, the retention member of the fifth or sixth embodiment, or another component.

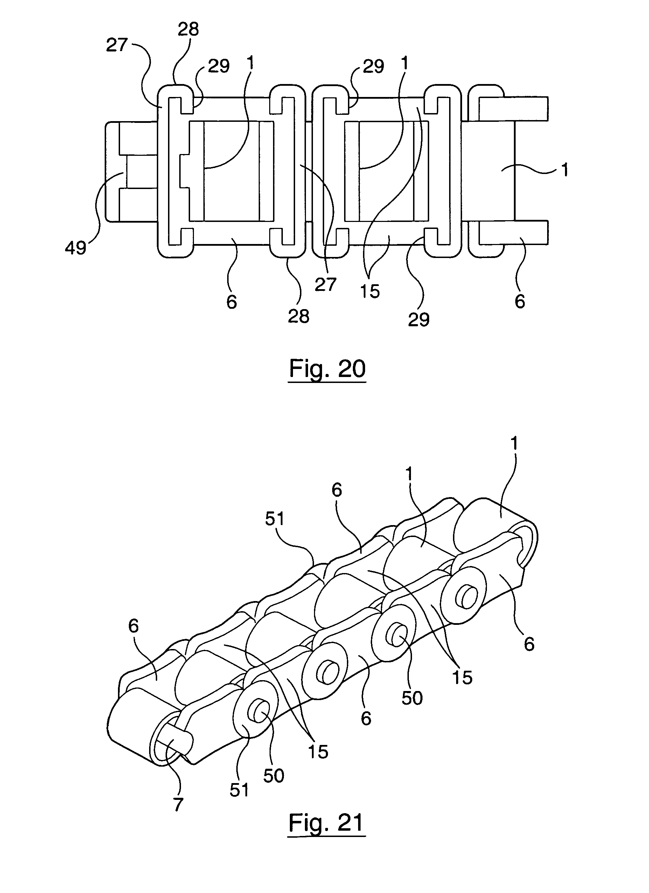

Figure 20 shows an alternative roller design (in a length of chain similar to the embodiment of figure 11). Each roller 1 has a central region of increased thickness so as to define an annular rib 49 on its internal surface. The ribs reinforce the rollers, and may also serve as a protrusion for use in a link plate lateral restraint mechanism such as the mechanism of the third embodiment. The rib 49 may be rectangular in cross section, as shown, or may be any other shape such as a parallelogram, semicircle, flat-faced ellipse, square, trapezoid or a triangle. Each roller may have more than one rib and the ribs may have the same or differing cross-sectional shapes or sizes.

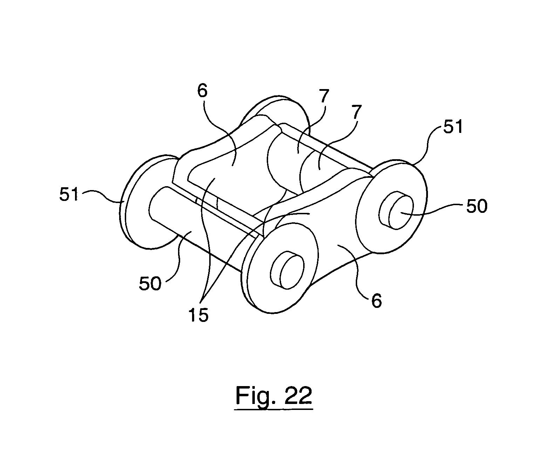

The chain of figures 21 and 22 is similar to that of figures 7 and 8 except that the bobbin is replaced by a pair of washers 51 that are interconnected by a pin 50. The thin disc-shaped washers overlap parts of the outer flanks of axially adjacent link plates 6 and serve to retain them laterally against outward movement away from the axis of the chain. Each pin 50 passes through central apertures in the washers 51 on each side and through the roller 1 and the pin ends are deformed (upset) to retain the washers 51. Any suitable enlarged head or other member may be used in place of the washer.

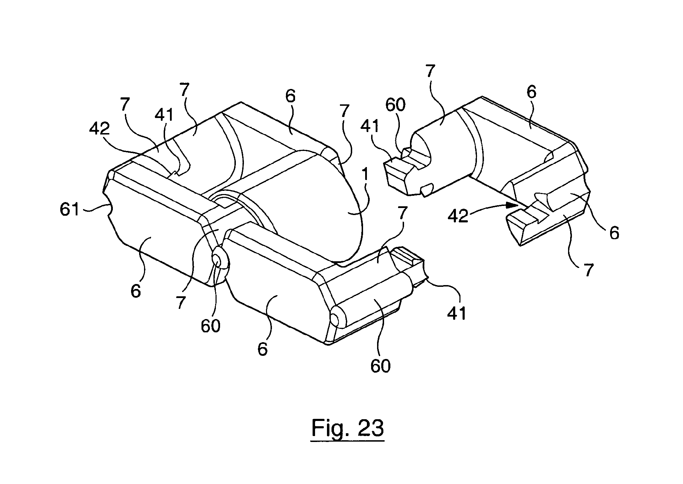

Figure 23 shows an alternative embodiment in which four links 6 of a chain are shown. One link 6 is shown separate from the others in order to allow inspection of its structure. Laterally opposed link plates are coupled together by means of a mechanical interconnection defined on the end of each articulation element 7. In particular the end of one articulation element 7 has a projection 41 for receipt in a corresponding void in the form of recess 42 on an opposed articulation element 7, so as to provide lateral restraint. The projection and void may provide a snap-fit interconnection, such that they may become interconnected simply by pressing the two opposed links 6 together until the projections 41 are received in the respective voids 42 of the articulation elements 7 when inside the rollers 1. As before, the adjacent pairs of articulation elements 7 are received in a common roller 1 such that their arcuate bearing surfaces 8 bear against the inside surface of the roller. Each of the articulation elements 7 that defines the projection 41 has an integrally moulded spacer 60 in the form of a cylindrical pin. The adjacent surface of the neighbouring articulation element has a corresponding arcuate recess 61 along its length for bearing against the spacer 60 during articulation. It will be understood that the spacer 60 may be configured such that it does not extend across the full lateral length of the articulation element 7 and need not be integrally formed but may be otherwise fixed permanently or temporarily. This design has the benefit that it comprises only two component types: the roller 1 and the link 6 (with integral articulation elements and spacer).

It will be appreciated that numerous modifications to the above described design may be made without departing from the scope of the invention as defined by the appended claims.

## Claims

1. A chain defining a longitudinal axis along its length, the chain comprising a plurality of axially spaced tubular rollers that are interconnected by a plurality of links, each link having at least two axially spaced protruding articulation elements for receipt by respective rollers, each roller being rotatably supported on articulation elements of axially adjacent links, each articulation element defining an arcuate bearing surface for sliding against the inner surface of a roller, the arcuate bearing surface being complementary to the inner surface of the roller.

2. A chain according to claim 1 wherein axially adjacent rollers are interconnected by a single link or are interconnected by a pair of laterally opposed links.

3. A chain according to claim 1 or 2, wherein when the chain is straight, the rotational angular clearance between axially adjacent links is greater than 32 degrees in at least one direction and is preferably 90 degrees or less in at least one direction.

4. A chain according to any one of claims 1 to 3,wherein when the chain is straight, the rotational angular clearance between axially adjacent links is approximately zero in one direction.

5. A chain according to any one of the preceding claims wherein the links are laterally restrained against movement away from the longitudinal axis of the chain, preferably by means of an interconnection between laterally opposed links, the interconnection preferably being between the articulation elements of the laterally opposed links, or between one or both articulation elements of a link and a roller, or being provided by at least one protrusion and at least one complementary void.

6. A chain according to claim 5, wherein the at least one void is provided by a space at one end the roller, that end being distal from the restrained link, and the at least one retaining protrusion on the end of an articulation element, the at least one retaining protrusion and complementary void preferably being held in engagement by positioning rods.

7. A chain according to any one of the preceding claims wherein at least one roller receives at least one retention member, each retention member laterally restraining at least one of the links that has an articulation element received within said roller.

8. A chain according to claim 7, wherein each retention member is elongate and comprises two portions that are joined together.

9. A chain according to claim 8 wherein the portions have a common bore, the portions being joined together by the insertion of an elongate rod into the common bore.

10. A chain according to any one of claims 7 to 9, wherein the at least one retention member is a bobbin having a shaft portion passing through the roller and an enlarged head at each end for preventing removal of the bobbin from the roller, one or both of the enlarged heads at least partially overlying one or more of the links connected to the roller.

11. A chain according to any one of claims 7-10, wherein each retention member has a clamp arm at each end, each clamp arm partially overlying a link of a pair of laterally opposed links and exerting a clamping force to urge it towards the other link of the pair.

12. A chain according to claim 11, wherein each clamp arm has a protrusion which is received in a complementary recess in the link that it partially overlies, the link preferably further comprising a ramped insertion path between the recess and an edge of the link, the insertion path preferably being shaped to guide the protrusion towards the recess during attachment of the retention member and to cam the clamp arms away from each other during attachment so as to elastically deform the retention member and generate the clamping force.

13. A chain according to any one of the preceding claims wherein the link comprises an assembly comprising two separate articulation elements interconnected by at least one spacer plate.

14. A chain according to any one of the preceding claims wherein at least one roller has at least one projection on its internal surface for receipt in a corresponding recess in the articulation elements.

15. A chain according to claim 7, wherein the retention member comprises a pin that extends through the roller and beyond the link on one or both sides, the pin having an enlarged head to retain significant lateral movement of the link away from the axis.

16. A chain according to any one of claims 1 to 6, wherein there is provided a spacer between each articulation element that is received in each roller, the spacer preferably having an arcuate surface to assist in relative articulating movement of the articulation elements in the roller, the spacer preferably being in the form of a cylindrical pin.

17. A chain according to claim 16, wherein the spacer is fixed to the articulation element, integrally or otherwise.
